# EUROPEAN PATENT APPLICATION

(11) **EP 1 577 340 A1**
(43) Date of publication of application: **21.09.2005**
(21) Application number: 05101949.5
(22) Date of filing: 14.03.2005
(51) Int. Cl.: C08K 3/30, C08K 3/22, C08K 3/26, E04B 1/88

(54) **A heavy plastic film, insulating structures containing it, process for its preparation and the use thereof**

(30) Priority: 15.03.2004 IL 16087604
(71) Applicant: Polyon Barkai Industries (1993) Ltd., 37860 Kibbutz Barkai (IL)
(72) Inventor: Yanai, Gil, 45845, Kibbutz Nir-Eliyahu (IL)
(74) Representative: Ponti Sales, Adelaida

(57) **Abstract**

A monolithic heavy plastic film made of a mineral filled plastic compound, said mineral filled plastic compound comprising 40 to 80% mineral filler having a specific gravity higher than 2.2 g/cm³ and being dispersed in a carrier.

A multi-layer heavy plastic film comprising a core layer of said mineral filled plastic compound; and two external layers of a heat-sealable polymer.

The present invention also refers to a process for the preparation of said monolithic and multi-layer heavy plastic film and to a thermal and acoustic insulating structure containing them.

## Description

The field of the present invention relates to improved acoustic insulation structures and the use thereof. Advantageously the structure should also have improved thermal insulation properties and also be reflective.

### BACKGROUND OF THE INVENTION

Conventional insulation materials (such as mineral wool, glass fibers, plastic foams, etc.) reduce heat transfer by means of the low thermal conductivity properties of their bulk. In this case the thermal resistance is proportional to the thickness of the insulation material layer used. As a result of this, a certain mass per area of insulation material is required to obtain a given level of thermal insulation (typically 1 to 3 kg/m²). In most cases, the mass associated with the applied insulation layer, confers to the finished structure a good level of acoustic insulation. This effect is based on the mass principle of impedance of airborne noise transmission (according to which, the impedance is proportional to the structure's mass). In addition, these fibrous and foamed materials have inherent vibration damping and noise absorbing properties that further enhance their acoustic insulation properties.

Reflective bubble films (hereinafter: "reflective bubble shaped structures"), among other types of reflective barriers, are frequently used as thermal insulators in e.g. building elements due to their ability to reduce the radiant heat transfer between the building's interior and the ambient. Reflective barriers are typically thin layers of low mass per area (less than 600 g/m²) and thickness (from 0.1 to about 25 mm) covered on one or both of their surfaces by a reflective (low emissivity) layer such as a metallic foil (most frequently, aluminum foil). In order to reduce the heat transfer through, for example, a building element (wall, roof, etc.), they are placed in a disposition such that their reflective surfaces delimit the air spaces within the said element. Used in this way, they effectively reduce the radiant heat transmission through the said air spaces, making them act as insulating layers of negligible mass and thickness.

As opposed to conventional (bulk) insulating materials, the low mass of the reflective barriers does not contribute significantly to the acoustic insulation of the building element.

It has thus been desirable to obtain a structure, which overcome the drawbacks of the above structures i.e. improve the acoustic insulation properties and preferably having also thermal and/or reflective properties.

### DESCRIPTION OF THE INVENTION

The present invention thus consists in a monolithic heavy plastic film made of a mineral filled plastic compound (hereinafter: "heavy plastic compound"), said heavy plastic compound comprising 40 to 80%, preferably 50 to 70%, mineral filler dispersed in a carrier.

The mineral filler has a specific gravity higher than 2.2 g/cm³, preferably higher than 3.5 g/cm³.

The mineral filler may be selected among, e.g. CaCO₃, TiO₂, Sb₂O₃, BaSO₄, etc., preferably BaSO₄.

The carrier being suitably a soft polymer.

The soft polymer may be selected among any polyolefin, preferably based on a polyethylene or a polypropylene resin or any of their respective co-polymers. These polyolefins may be plastics, plastomeres, elastomers and may be used pure or blended with other materials. A preferred material is an ethyl-vinyl acetate co-polymer having 19% vinyl acetate content.

The monolithic heavy plastic film according to the present invention may be produced by any suitable manufacturing process such as: film-calendering, film-casting, blown-film extrusion, etc. One preferred method is blown-film extrusion, in which the granules of the heavy plastic compound as specified above are fed into a heated barrel in which a screw is rotated in order to convey, compress and melt them. The molten compound flows through an annular die at the exit of which the tubular profile is blown to the desired lay-flat width and drawn to the desired thickness. The tubular film is then laid-flat, edge trimmed and rewound down stream in a continuous process.

One process for the preparation of a monolithic heavy plastic film in accordance with the present invention is performed by utilizing a single-layer blown-film extrusion machine into which the heavy plastic compound is introduced at the extruder's feeding opening; the granules of the heavy plastic compound are then conveyed, melted and compressed by the extruder screw, said screw being rotated at a speed between 10 and 250 RPM; and the machine's heating elements, which are set at temperatures between 140°C and 260°C; thereafter the molten heavy plastic compound is forced through the machine's annular die at an output rate between 10 and 3000 kg/hr; at the exit of said annular die the molten heavy plastic compound is shaped into a tubular film, blown to a lay-flat width between 200mm and 4500mm and let solidify; and the resulting tubular film being then hauled-off at a speed between 0.5 and 100 m/min, laid-flat, edge trimmed and wound into rolls at the machine's winding unit.

In a further embodiment of the present invention the structure consists in a multi-layer heavy plastic film which comprises preferably
(a) a core layer of a heavy plastic compound as herein before defined; and
(b) two external layers of a heat-sealable polymer selected among any polyolefin as specified above, preferably polyethylene.

The multi-layer heavy plastic film is preferably a co-extruded film having a core layer of about 80% of its total thickness made of the heavy plastic compound and coated on both sides with layers of a clean polymer, preferably polyethylene or any of its co-polymers, each layer of about 10% of the total thickness. This will enable heat-sealing of the heavy plastic film obtained thereof to the other layers within a bubble shaped structure, if any, in further production steps.

One process for the preparation of a multi-layer heavy plastic film in accordance with the present invention is performed by utilizing a three-layer blown-film extrusion machine into which the heavy plastic compound is introduced at the middle-extruder's feeding opening; the heat-sealable polymer being introduced at the inner- and outer-extruders' feeding openings; the granules of each material are then conveyed, melted and compressed separately by the independent action of the three extruder screws, said screws rotate at speeds between 10 and 250 RPM; and the machine's heating elements which are set at temperatures between 140°C and 260°C; thereafter the molten material delivered by each extruder is being forced separately through one of three concentric flow channels meeting at the machine's annular die at an output rate between 10 and 3000 kg/hr; at the exit of said annular die the molten three-layered structure is shaped into a tubular film, blown to a lay-flat width between 200mm and 4500mm and let solidify; and the resulting tubular film being then hauled-off at a speed between 0.5 and 100 m/min, laid-flat, edge trimmed and wound into rolls at the machine's winding unit.

The total thickness of the monolithic or multi-layer heavy plastic film is at least 0.1 mm, preferably between 0.3 and 0.7 mm, and has a specific gravity between 1.3 and 2.5 kg/m³, preferably between 1.4 and 1.75 kg/m³.

In an advantageous embodiment of the present invention, said structure has besides acoustic insulation properties also thermal insulating properties and thus suitably comprises an open- or closed- heavy bubble shaped structure of which at least one of its constitutive layers is a monolithic or multi-layer heavy plastic film as above defined. (hereinafter: "bubble shaped structure")

Should the structure also have reflective properties, it should comprise also a low emissivity facing material attached to at least one side of said bubble shaped structure. Said low emissivity facing material is preferably a metal, advantageously aluminum.

The heavy bubble shaped structure featured above may be produced by any suitable vacuum thermo-forming process, in which one or more of the constitutive layers are heated to their softening point and conformed into a bubble shaped pattern by means of a vacuum-forming mold. Additional constitutive layers may be attached to either one or both sides of each bubble shaped layer within the structure and heat-sealed to it, so as to deliver an open- or a closed-bubble structure. The external constitutive layers may have been laminated in a previous step to a metallic, preferably aluminum facing layer to provide the resulting heavy bubble shaped structure with a low-emissivity i.e. reflective surface. A suitable heat lamination process may be used to assemble double- or multiple-bubble shaped structures of the present invention.

The improved acoustic insulation is achieved by a significant increase in the mass per area ratio of the reflective bubble shaped structure. This, in turn, is achieved by replacing one or more of the thin plastic layers in the known reflective bubble shaped structure with a heavy plastic film, as herein before defined.

The thermal insulation properties of the reflective bubble shaped structure are maintained, since the low emissivity facing materials placed on either one or both of its sides remain unaltered in respect to other known reflective barriers.

The heavy reflective bubble shaped structure provided herein may be installed within a building element (façade, wall, floor, ceiling, roof, etc.) to enhance its thermal and acoustic insulation properties.

In accordance with a further embodiment of the present invention, there may also be provided thermal and acoustic insulations of a metal roof in a heavy-rain environment.

The present invention is described herein with reference to buildings' structures and elements. However, it is not restricted to this purpose and it might be used also for other structures such as structures of cars, airplanes, trains, machines etc.

### BRIEF DESCRIPTION OF THE DRAWINGS

The present invention will now be illustrated with reference to the accompanying drawings and example without being limited by same. (In said drawings identical parts appearing in several Figs. are marked for the sake of clarity by the same numeral.)

The drawings show:
- Fig. 1(a): shows a schematic cross-sectional view of a monolithic heavy plastic film;
- Fig. 1(b): shows a schematic cross-sectional view of a multi-layered heavy plastic film;
- Fig. 2: shows a schematic cross-sectional view along a one-sided reflective bubble shaped structure with the heavy plastic film shown in either Fig. 1(a) or Fig. 1(b);
- Fig. 3: shows a schematic cross-sectional view along a double-sided reflective bubble shaped structure with the heavy plastic film shown in either Fig. 1(a) or Fig. 1(b);
- Fig. 4: shows a schematic cross-sectional view along a double-sided reflective double-bubble shaped structure with the heavy plastic film shown in either Fig. 1(a) or Fig. 1(b);
- Fig. 5: shows a schematic cross-sectional view along a double-sided reflective multiple-bubble shaped structure with the heavy plastic film shown in either Fig. 1(a) or Fig. 1(b);
- Fig. 6: shows a schematic cross-sectional view along a reflective open-bubble shaped structure with the heavy plastic film shown in either Fig. 1(a) or Fig. 1(b);
- Fig. 7: shows a partially broken pictorial illustration of a building structure employing the insulation of various embodiments as shown in Figs. 1 to 6. Said embodiments are shown in diverse building elements such as floor, wall and roof; and
- Fig. 8: shows a schematic cross-sectional view of a metal roof structure employing the insulation of embodiments shown in Figs. 1 to 6.

The above drawings show in detail:

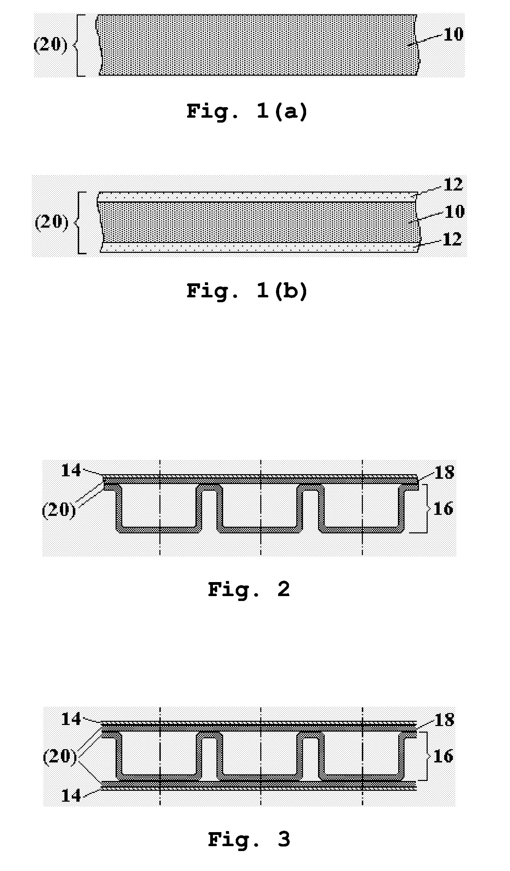

Figs. 1(a) and 1(b) describe two of the possible structures of the heavy plastic film which may be a monolithic structure made of the heavy plastic compound 10 as shown in Fig. 1(a), or the multi-layered structure shown in Fig. 1(b), composed of a core layer 10 of the heavy plastic compound and of two external layers 12 of a non-additivated polymer (as indicated above) covering said core layer 10. While layer 10 contributes a high mass per area ratio to the structures in which the film is used, the two external layers 12 enable the heat-sealing of the film to other constitutive layers in the reflective bubble shaped structures as described herein.

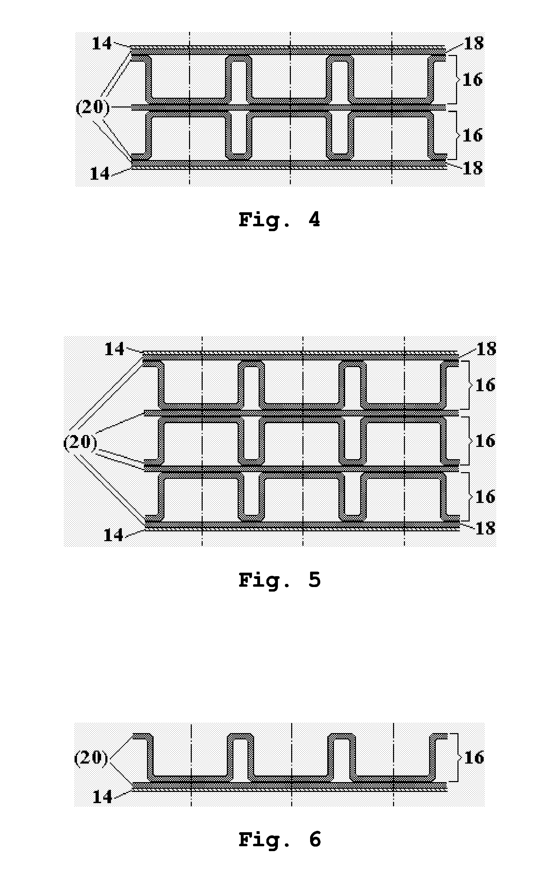

Figs. 2-5 show various reflective bubble shaped structures. These structures may be covered on one or both sides with a low-emissivity facing layer 14. These structures include at least one bubble shaped layer 16 on which a closing layer 18 is sealed to the open side of the bubbles, thus converting them into airtight closed cells. At least one of the plastic film layers 20 in each structure shown is replaced with the heavy film described in either Fig. 1(a) or Fig. 1(b). Each bubble shaped layer 16 in Figs. 4 and 5 may be of a different bubble diameter in respect to the other(s).

Fig. 6 shows a reflective open-bubble shaped structure. This structure consists of a known low-emissivity facing layer 14 attached on top of a bubble shaped layer 16. In this structure, the bubbles are left open. At least one of the plastic layers 20 in the structure shown is replaced with the heavy plastic film described in either Fig. 1(a) or Fig. 1(b).

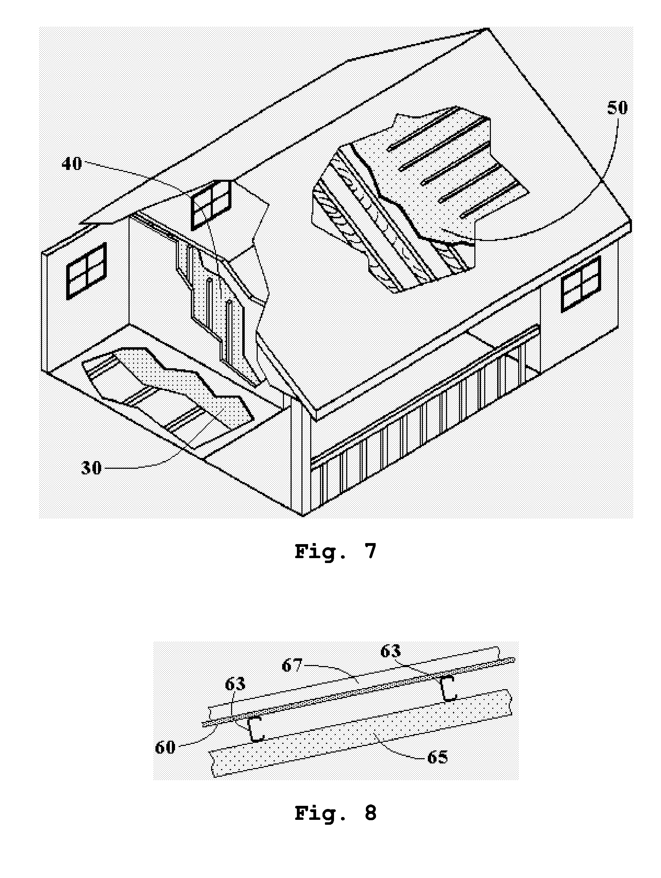

Fig. 7 illustrates a typical building structure including the thermal and acoustic insulation assemblies of Figs. 1 through 6. The Fig. shows a heavy reflective bubble structure installed within the floor 30, a wall 40 and the roof 50 respectively.

Fig. 8 illustrates a particular application of the present invention to a metal roof consisting of a structure of beams 65 and rafters 63 on which metal roofing sheets 67 are affixed atop of the insulating structure of the present invention 60 being illustrated in any of Figs. 2 to 6. It is a particular feature of the present invention that the disposition of the heavy reflective bubble structure 60 separating the metal roofing sheets 67 from their supporting rafters 63 will further enhance the acoustic insulation thus provided. According to this feature, the insulation provided by the present invention effectively reduces the transmission of noise produced by rainfall tapping on the roof.

### Example

The multi-layer heavy plastic film according to the present invention may be prepared as follows:

The heavy plastic film is produced in a three-layer blown-film line with an inner-layer extruder of 60 mm diameter, a middle-layer extruder of 120 mm and an outer-layer extruder of 60 mm. Each extruder has a smooth barrel feed-zone and a barrier type screw with a length/diameter ratio of 24:1, the machine has a die lip diameter of 457 mm and a die gap of 0.85 mm.

The barrel zones of the extruders are set at a temperature between 170°C and 185°C, the die head zones are set at a temperature between 195°C and 200°C.

A heavy plastic compound containing 60% of BaSO₄ and 40% of ethyl-vinyl acetate copolymer (of 19% vinyl acetate content) and having a specific gravity of 1.76 g/cc is fed into the middle-layer extruder, which is operated at 33 RPM. The inner-layer and outer-layer extruders are fed with a low-density polyethylene resin having a melt flow index of 2.0 dg/10min and a specific gravity of 0.92 g/cc. The inner-layer extruder is operated at 42 RPM and the outer layer-extruder at 69 RPM.

The operation conditions for the three extruders are as follows: For the inner-layer extruder delivering 31 kg/h the melt temperature is 200°C and the melt pressure 235 bar, for the middle-layer extruder delivering 262 kg/h the melt temperature is 225°C and the melt pressure 100 bar and for the outer-layer extruder delivering 34 kg/h the melt temperature is 225°C and the melt pressure 265 bar.

A tubular film is blown to a lay-flat width of 1200 mm at a haul-off speed of 6.8 m/min. The resulting film structure has a total thickness of 0.25 mm and an apparent specific gravity of 1.49 g/cc.

The resulting heavy plastic film is incorporated into a bubble structure by means of a standard bubble film manufacturing process where it replaces one or more of the constitutive layers which in the previous art where made of light and thin plastic films.

## Claims

1. A monolithic heavy plastic film made of a mineral filled plastic compound, **characterized in that** said mineral filled plastic compound comprises from 40 to 80% of a mineral filler having a specific gravity higher than 2.2 g/cm³ being dispersed in a carrier.

2. A monolithic heavy plastic film according to Claim 1, wherein said mineral filled plastic compound contains 50 to 70% mineral filler.

3. A monolithic heavy plastic film according to Claim 1 or 2, wherein said mineral filler has a specific gravity higher than 3.5 g/cm³.

4. A monolithic heavy plastic film according to any of Claims 1 to 3, wherein said mineral filler is selected among, CaCO₃, TiO₂, Sb₂O₃, and BaSO₄.

5. A monolithic heavy plastic film according to any of Claims 1 to 4, wherein said carrier is a soft polymer carrier.

6. A monolithic heavy plastic film according to Claim 5, wherein said soft polymer carrier is a polyolefin.

7. A monolithic heavy plastic film according to Claim 6, wherein said polyolefin is based on a polyethylene or a polypropylene resin or any of their respective co-polymers.

8. A monolithic heavy plastic film according to Claim 6 or 7, wherein said polyolefin is selected among plastics, plastomeres, elastomers and may be used pure or blended with other materials.

9. A monolithic heavy plastic film according to any of Claims 5 to 8, wherein said carrier is an ethyl-vinyl acetate co-polymer having 19% vinyl acetate content.

10. A multi-layer heavy plastic film comprising:
a) a core layer of a mineral filled plastic compound according to any of Claims 1 to 9; and
b) two external layers of a heat-sealable polymer.

11. A multi-layer heavy plastic film according to Claim 10, wherein the polymer is a polyolefin according to any of Claims 6 to 9.

12. A heavy plastic film according to any of Claims 1 to 11, having a total thickness higher than 0.1 mm and having a specific gravity between 1.3 and 2.5 kg/m³.

13. A heavy plastic film according to Claim 12, having a total thickness between 0.3 and 0.7 mm.

14. A heavy plastic film according to Claim 12 or 13, having a specific gravity between 1.4 and 1.75 kg/m³.

15. A thermal and acoustic insulating structure comprising bubble shaped structure of which at least one of its constitutive layers is a heavy plastic film according to any of Claims 1 to 14.

16. A thermal and acoustic insulating structure according to Claim 15, which comprises in addition a low emissivity facing material attached to one side of said bubble shaped structure.

17. A thermal and acoustic insulating structure according to Claim 16, wherein low emissivity facing material is attached also to the other side of said bubble shaped structure.

18. A thermal and acoustic insulating structure according to Claim 16 or 17, wherein the low emissivity facing material is aluminum.

19. A thermal and acoustic insulating structure according to any of Claims 15 to 18, having two or more bubble shaped layers.

20. A thermal and acoustic insulating structure according to any of Claims 15 to 19, having bubble shaped layers of differing bubble diameter.

21. Use of a thermal and acoustic insulating structure as defined in any of claims 15 to 20 as a part of a building element.

22. Use of a thermal and acoustic insulating structure as defined in any of claims 15 to 20 as a part of a metal roof structure.

23. Use of a thermal and acoustic insulating structure as defined in any of claims 15 to 20 as a part of a structure of cars, airplanes, trains and machines.

24. A process for the preparation of a monolithic heavy plastic film according to any of Claims 1 to 9 or 12 to 14, utilizing a single-layer blown-film extrusion machine into which a mineral filled plastic compound is introduced at the extruder's feeding opening; the granules of the mineral filled plastic compound are then conveyed, melted and compressed by the extruder screw, said screw being rotated at a speed between 10 and 250 RPM; and the machine's heating elements, which are set at temperatures between 140°C and 260°C; thereafter the molten mineral filled plastic compound is forced through the machine's annular die at an output rate between 10 and 3000 kg/hr; at the exit of said annular die the molten mineral filled plastic compound is shaped into a tubular film, blown to a lay-flat width between 200mm and 4500mm and let solidify; and the resulting tubular film being then hauled-off at a speed between 0.5 and 100 m/min, laid-flat, edge trimmed and wound into rolls at the machine's winding unit.

25. A process for the preparation of a multi-layer heavy plastic film according to any of Claims 10 to 14, utilizing a three-layer blown-film extrusion machine into which the mineral filled plastic compound is introduced at the middle-extruder's feeding opening; the heat-sealable polymer being introduced at the inner- and outer-extruders' feeding openings; the granules of each material are then conveyed, melted and compressed separately by the independent action of the three extruder screws, said screws rotate at speeds between 10 and 250 RPM; and the machine's heating elements which are set at temperatures between 140°C and 260°C; thereafter the molten material delivered by each extruder is being forced separately through one of three concentric flow channels meeting at the machine's annular die at an output rate between 10 and 3000 kg/hr; at the exit of said annular die the molten three-layered structure is shaped into a tubular film, blown to a lay-flat width between 200mm and 4500mm and let solidify; and the resulting tubular film being then hauled-off at a speed between 0.5 and 100 m/min, laid-flat, edge trimmed and wound into rolls at the machine's winding unit.

26. A thermal and acoustic insulation structure and, if desired, having reflective properties according to any of Claims 15 to 20, substantially as described and illustrated in reference to the annexed drawings.
